# EUROPEAN PATENT SPECIFICATION

(11) **EP 0 584 379 B1**
(45) Date of publication and mention of the grant of the patent: **05.07.1995**
(21) Application number: 92113860.8
(22) Date of filing: 14.08.1992
(51) Int. Cl.: B62K 19/18

(54) **Bicycle frame tube connecting device**
Verbindungseinrichtung für Fahrradrahmenrohr
Dispositif de connexion d'un tube de cadre d'une bicyclette

(43) Date of publication of application: 02.03.1994
(73) Proprietor: Wu, Yung-Yuan, Changhua Hsien (TW)
(72) Inventor: Wu, Yung-Yuan, Changhua Hsien (TW)
(74) Representative: Zeitler & Dickel

(56) References cited:
- DE-C- 105 090
- DE-C- 110 326
- FR-A- 867 740
- FR-A- 910 132
- GB-A- 670 957

## Description

### BACKGROUND OF THE INVENTION

The present invention relates to a bicycle frame tube connecting device according to the preamble of the claim.

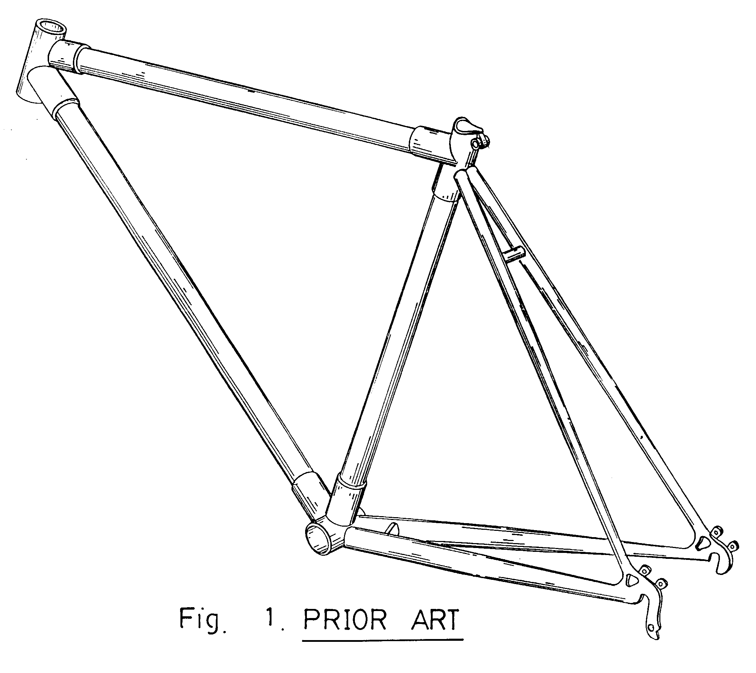

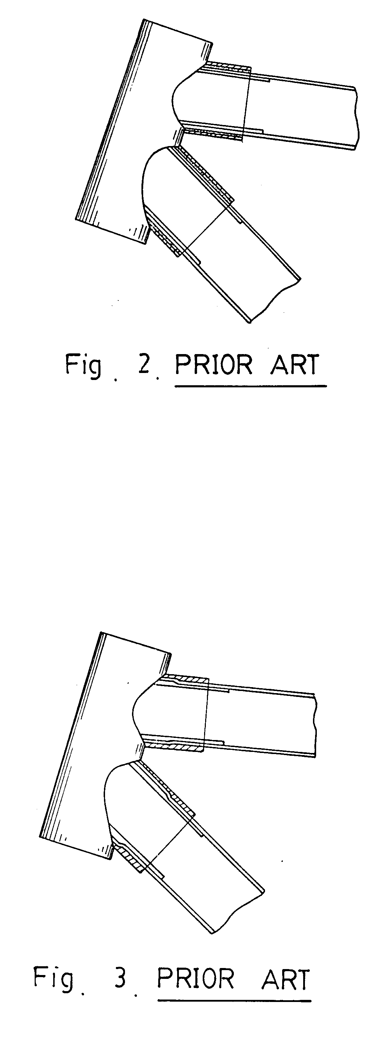

The frame of a bicycle is generally comprised of a top tube, a down tube, a seat tube and two seat stays respectively connected by a front frame tube connector, a rear frame connector and a bottom frame tube connector (see Fig. 1). The front frame tube connector has two lugs, which receive the top tube and the down tube respectively. The rear frame tube connector has two lugs, which receive the top tube and the seat tube respectively. The bottom frame tube connector has two lugs, which receive the down tube and the seat tube respectively. According to conventional manufacturing process, these tubes and frame tube connectors are commonly made from iron, and the connection between either tube and either frame tube connector is made through the process of welding. In recent years, aluminum and aluminum alloys have been used in making bicycles for the advantage of light-weight. When aluminum or aluminum alloys are used in making a bicycle frame, the connection between either tube and either frame tube connector can not be made through the process of welding. Therefore, a screw joint or an adhesive joint may be used. However, because each frame tube connector receives two frame tubes, it is not suitable for connecting frame tubes to a frame tube connector through screw joints. Fig. 2 illustrates a frame tube connecting method which connects a frame tube to a lug on a frame tube connector through an adhesive joint. According to this connecting method, the inside surface of the lug and the outside surface of the frame tube are respectively coated with a layer of a bonding resin. After coating, the frame tube is inserted into the lug and becomes firmly retained in place as the bonding resin is hardened. However, the bonding resin may brittle easily causing the connection loosened. Fig. 3 illustrates another frame tube connecting method which is to make an inside step on the inside surface of the lug and an outside step on the outside surface of the frame tube so that the steps engage each other as the frame tube has been inserted into the lug. The precision of the inside step and the outside step is critical, and therefore precision apparatus is needed for making the steps. Any small error in size may cause the connection unstable.

A bicycle frame tube connecting device according to the preamble of the claim is known from FR-A-867 740. However, although the circular projections of the frame tube pressed into the circular recesses on the inside of the lug increase the stability of the connection, this stability is sometimes not sufficient.

A similar bicycle frame tube connecting device is known from DE-C-110 326 which uses an additional relatively soft metal composition disposed in the recesses of the lug.

DE-C-105 090 shows a bicycle frame tube connecting device using a tubular reinforcing element inserted in the end region of the frame tube. This reinforcing element ist made of a very stiff material, for example cast iron, and comprises pre-formed circular grooves on its outer surface in which the frame tube can be pressed by compressing the lug. However, this known connecting device is not favourable in view of weight and has optical deficiencies because of visible grooves on the outer surface of the lug.

The underlying problem of the invention is therefore to provide a bicycle frame tube connecting device which is easy to install, inexpensive to manufacture and firmly connects the frame tube to the lug on the frame tube connector.

According to the present invention, this underlying problem has been solved by the features of the claim.

The inventive bicycle frame tube connecting device comprises a frame tube connector having at least one lug. Said lug has a plurality of pre-formed circular recesses spaced from one another around the inside surface of a bore through the longitudinal axis thereof. The connecting device comprises further at least one frame tube respectively inserted in the at least one lug. The connecting device further comprises at least one deformable reinforcing tube respectively inserted into the at least one frame tube. The reinforcing tube is deformed through a process of squeezing to form a plurality of circular projections spaced around a respective outside surface. The projections of the reinforcing tube form corresponding circular projections on the frame tube which engage the circular recesses of the lug.

In the following, the invention will be described more specifically by way of example in connection with the accompanying drawings, in which:
Fig. 1 is an elevational view of a bicycle frame assembly;
Fig. 2 shows a known connecting device having two frame tubes respectively inserted in two lugs of the connecting device and secured in place by a bonding resin;
Fig. 3 shows a known connecting device which comprises frame tubes having each an outside step respectively engaged with the inside step on the respective lug; and
Fig. 4 is a sectional view showing a connecting device according to the present invention in which a reinforcing tube is inserted in each frame tube to reinforce the connection.

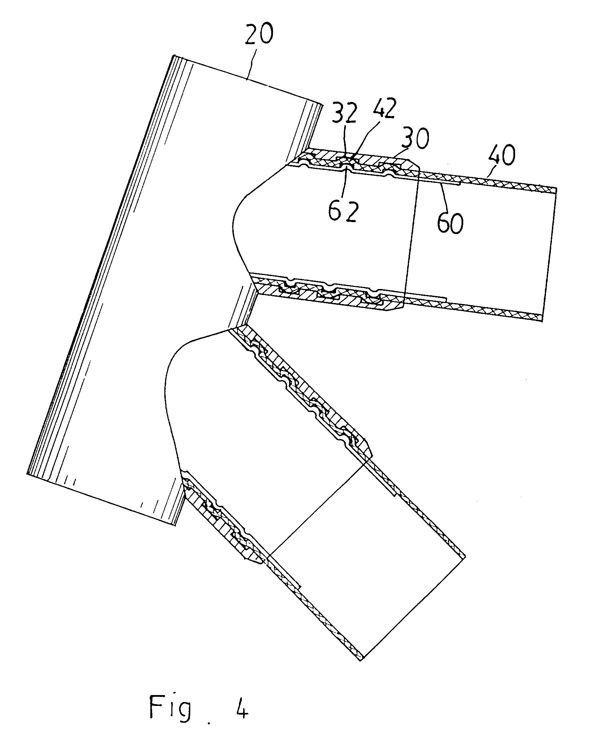

Referring to Fig. 4, the present invention is generally comprised of a frame tube connector 20 having at least one lug 30, which receives a respective frame tube 40. Each lug 30 of the frame tube connector 20 has a plurality of circular recesses 32 spaced from one another around the inside surface thereof. Each frame tube 20 is inserted in the respective lug 30.

Additionally, a reinforcing tube 60 is inserted in each frame tube 40. The reinforcing tube 60 is then treated through a process of squeezing to form a plurality of spaced circular projections 62 around the outside surface of each reinforcing tube 60. The circular projections 62 on the reinforcing tube 60 are adapted to form a plurality of corresponding spaced circular projections 42 around the outside surface of each frame tube 40 respectively engaging the circular recesses 32 on the respective lug 30. In other words, the circular projections 62 of the reinforcing tube 60 engage circular recesses (not indicated) formed on the inside surface of the circular projections 42 of the respective frame tube 40 to reinforce the connection. Therefore, each frame tube 40 becomes tightly retained in the respective lug 30 on the frame tube connector 20.

In practice, the number of the circular recesses 32 on each lug 30 and the number of the circular projections 42 or 62 on each frame tube 40 or reinforcing tube 60 may be changed according to different requirements. The shape of the cross section of each circular recess 32 may be variously embodied.

## Claims

1. A bicycle frame tube connecting device comprising a frame tube connector (20) having at least one lug (30), said lug (30) having a plurality of pre-formed circular recesses (32) spaced from one another around the inside surface of a bore through the longitudinal axis thereof, at least one frame tube (40) respectively inserted in said at least one lug (30) and treated through the process of squeezing to form a plurality of outwardly extending circular projections (42) around a respective outside surface, which projections (42) engage said circular recesses (32),
**characterized** by
at least one deformable reinforcing tube (60) respectively inserted into said at least one frame tube (40) and deformed through said process of squeezing to form a plurality of circular projections (62) spaced around a respective outside surface and respectively fit said circular projections (42).

## Patentansprüche

1. Fahrradrahmenrohr-Verbindungseinrichtung mit einem Rahmenrohrverbinder (20), der wenigstens einen Ansatz (30) hat, wobei der Ansatz (30) eine Vielzahl von vorgeformten kreisförmigen Aussparungen (32) aufweist, die voneinander um die innere Oberfläche einer Bohrung entlang ihrer Längsachse beabstandet sind, mit wenigstens einem Rahmenrohr (40), das in den wenigstens einen Ansatz (30) entsprechend eingeführt und durch den Zusammendrückprozeß behandelt ist, um eine Vielzahl von sich nach außen erstreckenden kreisförmigen Vorsprüngen (42) um eine entsprechende äußere Oberfläche herum zu bilden, wobei die Vorsprünge (42) mit den kreisförmigen Aussparungen (32) in Eingriff sind,
**gekennzeichnet durch**
wenigstens ein verformbares Verstärkungsrohr (60), das in das wenigstens eine Rahmenrohr (40) eingeführt und durch den Zusammendrückprozeß verformt ist, um eine Vielzahl von kreisförmigen Vorsprüngen (62) zu bilden, die um eine entsprechende äußere Oberfläche herum beabstandet sind und mit den kreisförmigen Vorsprüngen (42) entsprechend zusammenpassen.

## Revendications

1. Dispositif de connexion pour les tubes d'un cadre de bicyclette, comprenant un connecteur (20) pour les tubes du cadre, possédant au moins un manchon (30), ledit manchon (30) possédant une pluralité d'évidements circulaires (32) préformés espacés les uns des autres autour de la surface intérieure d'un perçage à travers l'axe longitudinal de celui-ci, au moins un tube de cadre (40) introduit respectivement dans ledit au moins un manchon (30), et traité par une opération de serrage afin de former une pluralité de projections circulaires (42) qui s'étendent vers l'extérieur autour d'une surface extérieure respective, ces projections (42) engageant lesdits évidements circulaires (32),
caractérisé par au moins un tube de renfort déformable (60) introduit respectivement dans ledit au moins tube de cadre (40) et déformé par ladite opération de serrage pour former une pluralité de projections circulaires (62) espacées autour d'une surface extérieure respective, et adaptées respectivement auxdites projections circulaires (42).
